# EUROPEAN PATENT APPLICATION

(11) **EP 3 193 135 A1**
(43) Date of publication of application: **19.07.2017**
(21) Application number: 17151325.2
(22) Date of filing: 13.01.2017
(51) Int. Cl.: G01C 5/06, G01C 7/06, G01V 9/00

(54) **SUBSIDENCE MONITORING SYSTEM**

(30) Priority: 15.01.2016 NL 2016100
(71) Applicant: Fugro N.V., 2264 SG Leidschendam (NL)
(72) Inventor: Jongsma, Arnoud Marc, 2264 SG Leidschendam (NL)
(74) Representative: Nederlandsch Octrooibureau

(57) **Abstract**

A device (20) for monitoring a height profile of an ocean floor (14). The device comprises an elongated structure (22), and includes a first fluid conduit (34) for accommodating a first liquid (36), at least one differential pressure transducer (24a) provided along the elongated structure, and in fluid communication with the first liquid at a first pressure (Pa,1) based on the communicating vessels principle and with a second liquid (38a) at a second pressure (Pa,2), when in use. The at least one pressure transducer is configured for measuring differential pressures between the corresponding first and second pressures. The device further comprises a pressure compensator (26) for exerting on the first liquid an inner reference pressure (Pr,1) in response and proportional to an outer reference pressure (Pr,2) exerted on the pressure compensator by the body of water at a reference position (Rr).

## Description

### TECHNICAL FIELD

The invention relates to a device for monitoring a height profile of a submerged earth surface. Furthermore, the invention relates to methods for deploying such a device on a submerged earth surface.

### BACKGROUND ART

The geometry of ocean floors or sea floors may change due to many causes, for example by plate tectonic effects, volcanic activity, mining, and gas or oil extraction. It may be desirable to monitor such profile changes in time to allow timely detection of excessive subsidence or rising of particular regions, so that necessary precautions may be taken to prevent dislocation or collapse of the surface and/or potential damage to nearby stationary structures. Accuracies in the order of centimeters or less may be required to provide a timely indicator of rising/subsidence of such submerged surfaces.

Various subsidence measurement devices are known that operate based on measurement of pressures on one or more locations along a submerged surface (e.g. ocean floor or sea floor). Such pressure readings can be converted into a height profile, and successive pressure readings may be acquired to detect time variations in the height profile.

In deep sea environments, with typical ocean floor depths in the order of several kilometers, the sensors must be able to withstand pressures of several hundred bars. To be able to measure subsidence/rising of a submerged surface in the order of less than a centimeter, the sensors must be able to measure pressure variations in the order of a millibar. Unfortunately, many error sources exist in the dynamic environment of a sea or ocean floor. Tidal changes in water depth, variations of atmospheric pressure, waves, and currents, etc. may all cause considerable variations in the local water pressure at/near the submerged surface. Pressure sensors exhibit long term bias errors due to e.g. aging and drift. Such errors are typically two orders of magnitude larger than the required sub-centimeter level of precision.

Patent document EP 2 259 017 B1 describes a device for monitoring changes in a seabed geometrical profile. This device comprises an airtight structure with measuring modules and a reference unit that are interconnected via a sealed pipe, and which houses a hydraulic circuit containing a pressurized liquid, a pneumatic circuit filled with constantly pressurized gas, a plurality of differential pressure transducers which are placed in the modules at local communication points between the hydraulic and pneumatic circuits, and an electronic circuit with a processor for processing pressure data from the transducers to calculate differences with respect to a reference point. The device determines altitude profile differences in modules along the length of the device, based on pressures differences between the hydraulic circuit and the pneumatic circuit at the local communication points.

In order to permit stable operation of the device described in EP2259017, the measuring modules and the connecting pipe need constant pressurization by the hydraulic and pneumatic circuits and total isolation from the ambient pressure. Construction requirements for such a device may be considerable. Failures in the watertight pressure-shielded structure and/or circuit controllers will be difficult to inspect and repair in deep water conditions, where ambient pressures are very high and access may be very limited.

### SUMMARY OF INVENTION

It would be desirable to provide a device for monitoring height profiles of a submerged earth surface, which is better suited for long-term deployment in deep-water environments.

Therefore, according to a first aspect, there is provided a device for monitoring a height profile of a submerged earth surface located below a body of water. The device comprises an elongated structure, configured for deployment along the submerged earth surface, and including a first fluid conduit for accommodating a first liquid. The device also comprises at least one differential pressure transducer, which is provided along the elongated structure, and which is adapted to be in fluid communication with the first liquid at a corresponding first pressure Pi, 1 based on the communicating vessels principle, and with a second liquid at a corresponding second pressure Pi,2, when the device is in use. The at least one pressure transducer is configured to measure a differential pressure ΔPi between the corresponding first and second pressures, when in use. The device further comprises a processing circuit configured for obtaining an indication of a height profile difference ΔZi associated with the at least one pressure transducer, based on the differential pressure measured by the at least one pressure transducer. Furthermore, the device comprises a pressure compensator, which is configured for exerting on the first liquid in the first fluid conduit an inner reference pressure Pr,1 in response and proportional to an outer reference pressure Pr,2 exerted on the pressure compensator by the body of water at a reference position Rr on or in the submerged earth surface (if the device is deployed).

The proposed device is configured to be deployed on/in a submerged earth surface along a trajectory where monitoring of a height profile is required during an extended period of time (e.g. months to years). The pressure compensator may continuously sample the outer reference pressure Pr,2 of the local water column at the reference position Rr. This pressure compensator is configured for exerting an inner reference pressure Pr,1 onto the first liquid inside the first fluid conduit, which is proportional to the outer reference pressure Pr,2. The pressure compensator thus allows adaptation of the inner reference pressure exerted on the first liquid in the first conduit in response to temporary changes in the outer reference pressure Pr,2. The device comprises at least one differential pressure transducer, and preferably two or more differential pressure transducers which are provided at different sample position along the elongated structure. The first liquid communicates with the differential pressure transducer(s) via the first fluid conduit, based on the communicating vessel principle. All water column pressure variations that are common over the length of the elongated structure (e.g. resulting from tide, density and barometric effects) can thus be cancelled out without measuring them individually, and without needing tidal recorders or actively controlled pressurization of mechanically isolated reference lines. The proposed device can thus be made more robust and suitable for deep water deployment.

The pressure compensator preferably forms a sufficiently large reservoir for the first fluid, such that local fluid volume changes inside the at least one pressure transducer will not lead to significant fluid level changes in other parts of the monitoring system.

The relation between the outer reference pressure Pr,2 of the water at the reference position and the resulting inner reference pressure Pr,1 exerted on the first fluid by the pressure compensator is proportional, which implies here that the inner reference pressure behaves as a strictly increasing function of the outer reference pressure. Preferably, the pressure compensator is configured for exerting on the first liquid in the first fluid conduit an inner reference pressure Pr,1 in response and substantially equal to the outer reference pressure Pr,2, but other monotonically increasing one-to-one relations between outer and inner reference pressures may be implemented by appropriate calibration of the pressure sensor(s) and compensator.

The differential pressure transducer(s) may for example comprise a pressure sensor that is based on a strain-based pressure sensing mechanism. The pressure sensor may for example comprise a deformable member and an optical fiber with a Fiber Bragg Grating that is configured to adapt its index of refraction in response to deformation of the diaphragm.

According to the communicating vessels principle, the first liquid will assume similar height levels along the first fluid conduit, presuming that the first fluid conduit is level with a gravitational equipotential surface. Height level differences may arise in the first liquid as a result of the local height variations of the fluid conduit, in accordance with the curvature of the submerged surface in/on which the monitoring device resides. Height variations of the first fluid conduit resulting from rising/subsidence of the submerged surface can thus be detected at specific transducer locations in the form of local differential pressures.

According to an embodiment, the mass density ρ1 of the first liquid in the first fluid conduit exceeds a mass density of liquid water pw, in particular of the water forming the ambient water body at the deployment site. The first liquid will then occupy lowest points in the first fluid conduit, as a result of gravitational/buoyancy effects. The first fluid may for example be a solution of Potassium Iodide salt in water, with a mass density ρ1 of about 1500 kg/m³, whereas the ambient fluid may be ocean water with a mass density pw in the range of 1020 to 1050 kg/m³ at larger depths.

In an alternative embodiment, the mass density ρ1 of the first liquid 36 in the first fluid conduit may be less than the mass density of liquid water pw.

In an embodiment, the second liquid is part of the body of water. In this embodiment, the at least one differential pressure transducer is in fluid communication with a local portion of the body of water at a corresponding sample position Ri, if the level monitoring device is in a deployed state. The second pressure Pi,2 then corresponds to a local ambient pressure of the body of water at the corresponding sample position.

In alternative embodiments, the second liquid is a reference liquid. In these embodiments, the elongated structure includes a second fluid conduit for accommodating the second liquid, and the pressure compensator is configured for exerting onto the second liquid in the second liquid conduit a further inner reference pressure Pr,3 in response and proportional to the outer reference pressure Pr,2 exerted on the pressure compensator by the body of water at the reference position Rr.

The relation between the outer reference pressure Pr,2 of the water at the reference position and the resulting further inner reference pressure Pr,3 exerted on the second fluid by the pressure compensator is again proportional, which implies that the further inner reference pressure also behaves as a strictly increasing function of the outer reference pressure. Preferably, the pressure compensator is configured for exerting on the second liquid in the second fluid conduit a further inner reference pressure Pr,3 in response and substantially equal to the outer reference pressure Pr,2. Other monotonically increasing one-to-one relations between outer and further inner reference pressures may be implemented via appropriate calibrations.

According to a further embodiment, the mass density of the first liquid in the first fluid conduit differs from the mass density of the second liquid in the second fluid conduit. For example, when the mass density ρ1 of the selected first liquid in the first fluid conduit exceeds a mass density of liquid water pw, the second liquid may be selected to have a second mass density ρ2 that is lower than the mass density of liquid water pw.

According to an embodiment, the pressure compensator comprises a first reference vessel that defines an inner void for holding a portion of the first liquid. This inner void is in fluid communication with the first fluid conduit. In this embodiment, the first reference vessel comprises a first compensator wall that is substantially impermeable to the first liquid and to the body of water. This first compensator wall defines an interface between the inner void and the body of water, and is at least partially moveable to allow dynamic adaptation of the inner reference pressure Pr,1 of first liquid inside the first reference vessel in response to changes in the outer reference pressure Pr,2.

The first compensator wall in the first reference vessel is at least partially moveable. The first compensator wall may be rigid and integrally displaceable relative to the vessel housing (e.g. a piston) in response to differences between the outer reference pressure and the inner reference pressure, or partially fixed to the vessel housing and partially flexible to be deformable (e.g. a membrane) as a result of pressure differentials.

According to a further embodiment, the pressure compensator comprises a second reference vessel that defines a further inner void for holding a portion of the second liquid. This further inner void is in fluid communication with the second fluid conduit. In this further embodiment, the second reference vessel comprises a second compensator wall that is substantially impermeable to the second liquid and to the body of water. This second compensator wall defines an interface between the further inner void and the body of water, and is at least partially moveable to allow dynamic adaptation of the further inner reference pressure Pr,3 of second liquid inside the second reference vessel in response to changes in the outer reference pressure Pr,2. The second compensator wall may be partially movable in a similar manner as the first compensator wall.

Zero offset errors may still be a concern, even if differential pressure sensors are used. Assuming that height variations of the ocean floor (in the survey area) are limited to twenty meters, and if a first liquid with a density of 1500 kg/m³ is used, then the dynamic range of the differential pressure sensor may need to be at least ±1 bar. For pressure sensors rated with zero offset aging specifications in the order of 0.1% per year, the resulting zero offset for a 1 bar sensor would be about 1 millibar (corresponding to a 2 centimeter height error). Long term device accuracy would therefore highly benefit from means for periodic zero offset calibration.

Therefore, according to an embodiment, the pressure transducer comprises a housing that defines: - a first chamber for accommodating a variable portion of the first liquid; - a second chamber for accommodating a variable portion of the second liquid, and - an intermediate chamber for accommodating an intermediate liquid. In this embodiment, the pressure transducer further comprises a first differential pressure sensor that is configured for acquiring differential pressure measurements ΔPj between the second liquid in the second chamber and the intermediate liquid in the intermediate chamber. The second chamber is coupled to the intermediate chamber by a first moveable wall that is impermeable for the second liquid and the intermediate liquid, and the first chamber is coupled to the intermediate chamber by a second moveable wall that is impermeable for the first liquid and the intermediate liquid.

According to a further embodiment, the first differential pressure sensor comprises two sensor ports, and the first moveable wall is moveable through the housing between: - a first position wherein the first moveable wall is between the two sensor ports, corresponding to a sensing mode of the pressure transducer and allowing acquisition of differential pressure measurements ΔPj between the second liquid in the second chamber and the intermediate liquid in the intermediate chamber, and - a second position wherein the first moveable wall is past the two sensor ports, corresponding to a calibrating mode of the pressure transducer. In the calibrating mode, either the second liquid or the intermediate liquid is in fluid communication with both of the two sensor ports to allow zero-offset calibration of the first differential pressure sensor.

The term "moveable wall" is used herein to broadly indicate a wall that moves, deforms, or both, when subjected to net forces. The second chamber and the intermediate chamber may jointly define a piston cylinder, and the first moveable wall may be formed as a piston head that is moveable through the piston cylinder between the first position wherein the piston head is between the two sensor ports (sensing mode) and the second position wherein the piston head is past the two sensor ports (calibrating mode).

In yet a further embodiment, the second moveable wall is formed as a flexible membrane with a high compliance, and the pressure transducer comprises a second differential pressure sensor that is configured for acquiring further differential pressure measurements ΔPk between the first liquid in the first chamber and the intermediate liquid in the intermediate chamber. The measured first differential pressure ΔPj and second differential pressure ΔPk may be added to determine an overall differential pressure difference ΔPi between the first liquid and the second liquid (i.e. ΔPi = ΔPj + ΔPk). Preferably, the high compliance of the membrane allows the second differential pressure ΔPk to remain significantly smaller than the first differential pressure ΔPj (i.e. ΔPk <<ΔPj).

According to an embodiment, the processing circuit in the level monitoring device comprises a memory unit for storing the calculated height profile differences ΔZi with timestamps, to form a dataset of time-dependent height profiles, and a transmitter for communicating the dataset to a receiver of an external vehicle.

The transmitter may be configured for communicating data via at least one of an acoustic, optic, or wired transmission channel.

The level monitoring device may be implemented based on a modular principle. Therefore, according to an embodiment, the at least one differential pressure transducer is formed as a modular unit. This modular unit comprises a housing provided with a first conduit coupling, which is configured for mechanically connecting the housing to the first fluid conduit and for establishing fluid communication between the pressure transducer and the first fluid conduit. The modular unit also comprises a processor unit configured for calculating the indication of the height profile difference ΔZi, based on the differential pressure ΔPi measured by the at least one pressure transducer. The modular unit further comprises a memory unit for storing the calculated indication of the height profile difference with a timestamp to form a dataset of time-dependent height profiles, and a transmitter for communicating the dataset to an external receiver. Furthermore, the modular unit comprises a power source, for powering the processor unit, the memory unit, and the communication unit.

In a further embodiment, the housing comprises a second conduit coupling configured for mechanically connecting a further first fluid conduit to the housing, and for establishing fluid communication between the first fluid conduit and the further first fluid conduit.

In yet a further embodiment, the housing comprises a third conduit coupling configured for mechanically connecting the housing to the second fluid conduit and for establishing fluid communication between the pressure transducer and the second fluid conduit. In addition, the housing may comprise a fourth conduit coupling for mechanically connecting a further second fluid conduit to the housing, and for establishing fluid communication between the second fluid conduit and the further second fluid conduit.

Due to the dynamic pressure compensation mechanism provided by the pressure compensator in the deployed monitoring device, the ambient ocean water and the first liquid in the first fluid conduit (and possibly also the second liquid in the second conduit) will have almost identical pressures. This pressure equalization helps to reduce the probability of mixing and contamination between ambient water and first liquid in the fluid conduit during connection of further transducer modules and/or fluid conduits to the initially deployed monitoring device. The dynamic pressure compensation mechanism thus facilitates modular design and deployment of the monitoring device. Each further pressure transducer may be provided with an independent optical transceiver unit (e.g. a LED, photocell, and microcontroller), to establish optical communication coupling with the control circuit of the monitoring device.

The level monitoring device may thus be formed by modular transducer units, which may be connected in series up to a desired length. Selected ones or each of the transducer modules may include additional couplings that allow elongated structures to be connected in star-, tree, and/or ring (polygonal) patterns, to form a level monitoring sensor network. A remotely operated or autonomous underwater vehicle may be used to connect further pressure transducer modules and/or fluid conduits at appropriate locations to the deployed monitoring device.

According to further aspects, various methods are provided for deploying level monitoring devices in accordance with the first aspect.

### BRIEF DESCRIPTION OF DRAWINGS

Embodiments will now be described, by way of example only, with reference to the accompanying schematic drawings in which corresponding reference symbols indicate corresponding parts. In the drawings, like numerals designate like elements. Furthermore, multiple instances of an element may each include separate letters appended to the element number. For example two instances of a particular element "24" may be labeled as "24a" and "24b". In that case, the element label may be used without an appended letter (e.g. "24") to generally refer to every instance of the element, while the element label will include an specific appended letter (e.g. "24a") to refer to a specific instance of the element, or a generic index (e.g. "24i") to refer to non-specific instances of the element.
Figure 1 schematically shows a side view of a level monitoring device according to an embodiment;
Figure 2 schematically shows a cross-sectional side view of part of a device according to an embodiment;
Figure 3 schematically shows a cross-sectional side view of part of a level monitoring device according to another embodiment;
Figures 4a and 4b shows a schematic cross-sections of a pressure transducer in a sensing mode and a calibrating mode respectively;
Figure 5 schematically shows a cross-sectional side view of part of a level monitoring device according to an embodiment with modular pressure transducers;
Figures 6a and 6b illustrate a method for deploying a level monitoring device according to an embodiment;
Figures 7a and 7b illustrate another embodiment of a method for deploying a level monitoring device, and
Figures 8a and 8b illustrate yet another embodiment of a method for deploying a level monitoring device.

The figures are meant for illustrative purposes only, and do not serve as restriction of the scope or the protection as laid down by the claims.

### DESCRIPTION OF EMBODIMENTS

In the next figures, Cartesian coordinates will be used to describe spatial relations for exemplary embodiments of the level monitoring device and methods for deploying such a device. Reference symbol Z is used to indicate a vertical direction that is predominantly along and opposite to the local earth gravitation vector (in a local small-scale planar approximation of the earth). Prepositions "above" and "below" pertain to the vertical direction Z. Reference symbols X and Y are used to indicate transversal directions in the (virtual) plane perpendicular to the vertical direction Z.

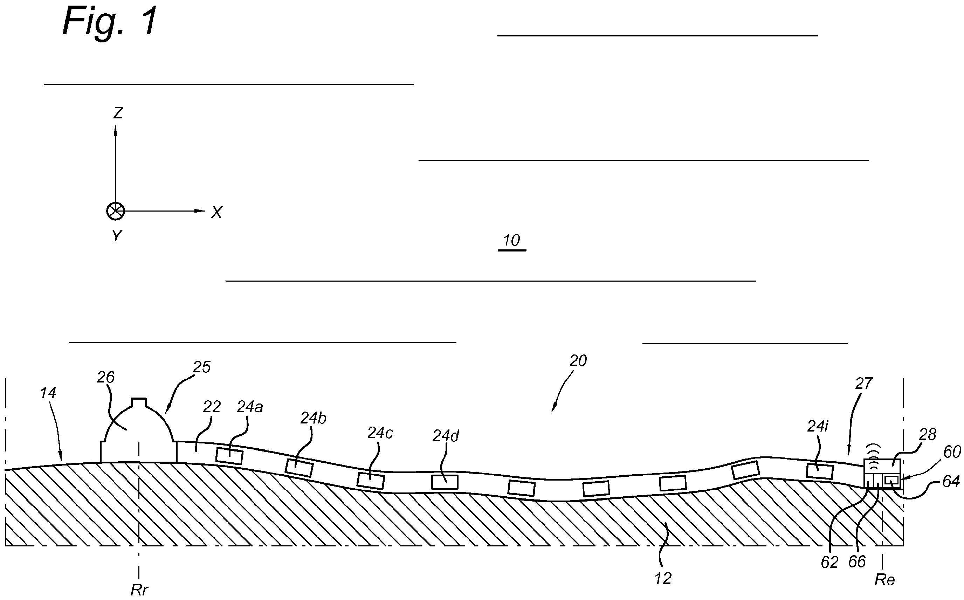

Figure 1 schematically shows an embodiment of a device 20 for monitoring a height profile of an ocean floor 14. The ocean floor 14 forms a water-soil interface between an above-situated body of ocean water 10 and the earth layer 12 below. The ocean floor 14 is generally not perfectly planar, but has local height variations with respect to the vertical direction Z.

The device 20 comprises an elongated tubular structure 22, which is sufficiently flexible to be deployed in a trajectory along the local contour of a predetermined portion of the ocean floor 14. This tubular structure 22 should be sufficiently flexible to allow curving along with the local variations of the ocean floor 14, at least along the vertical direction Z. This tubular structure 22 may be flexible along its entire length, or at least piecewise flexible in-between rigid portions. The phrase "trajectory along the ocean floor" is used to broadly indicate that the device 20 may rest on the ocean floor 14, in the ocean floor layer 12, partly on the ocean floor 14 partly in the ocean floor layer 12 (e.g. in an alternating arrangement). The flexible elongated structure 22 allows the device 20 to be stored or transported on board a vessel in a stowed state wherein the elongated structure 22 is rolled up or folded up so as to occupy a relatively small volume. The device 20 may for example be wrapped with its elongated structure 22 around a drum, which can be selectively mounted onto a winch of a crane system mounted on-board the vessel.

The device 20 includes a pressure compensator 26 at a first distal end 25 of the tubular structure 22. The monitoring device 20 also includes an end body 28 at a second distal end 27 of the tubular structure, which is opposite to the first distal end 25.

The device 20 further includes a plurality of differential pressure transducers 24a, 24b, 24c..., which are provided along the elongated structure 22. In this example, the differential pressure transducers 24i are located at substantially equal distances along the tubular structure 22. In other embodiments, the inter-transducer distances may be non-uniform.

The device 20 includes a control circuit 60, which is configured for obtaining indications of height differences associated with the pressure transducers 24 based on differential pressures measured by the pressure transducers 24. The control circuit 60 comprises a control processor 62 configured for controlling data communication with the pressure transducers 24a, and a memory unit 64 for storing height profile data. The device 20 may be configured to continuously or intermittently collect and store a history of height profile data. Alternatively, the device 20 may be configured to continuously or intermittently collect height profile data, while storing only a specific height profile dataset, e.g. only the last (i.e. current) dataset. In yet another alternative embodiment, the control circuit 60 may be configured to remain in a sleep-mode until a nearby vehicle (e.g. an AUV) explicitly requests height profile data from the device 20, or until the device 20 detects the presence of such nearby vehicle via other sensors. In this example, the memory unit 64 is configured to add a timestamp to each measured height profile data set.

The device 20 also includes a wireless transmitter 66 for communicating the dataset to a receiver of an external vehicle (e.g. based on acoustic or optical transmission). The control circuit 60 with wireless transmitter 66 may be configured to transmit the current height profile dataset or history of height profile data at predetermined times. Alternatively, the wireless transmitter 66 may be configured to transmit a current height profile dataset or history of height profile data upon request of a nearby underwater vehicle (e.g. an AUV).

The control circuit 60 further comprises a power supply 68, which is configured to provide power to control circuit components and/or to the pressure transducers 24. The power supply 68 may for example include Lithium Ion batteries with negligible self-discharge, to reduce or even eliminate the need for battery replacement during the operational lifetime of the monitoring system 20.

In this example, the control circuit 60 is accommodated in the end body 28. In alternative embodiments, any one of the control processor 62, memory unit 64, data transmitter 66, power supply 68, or the entire control circuit 60, may be located elsewhere in the device. For example, one or all of the above components may be accommodated near the pressure compensator 26 at the first end 25 of the elongated structure 22.

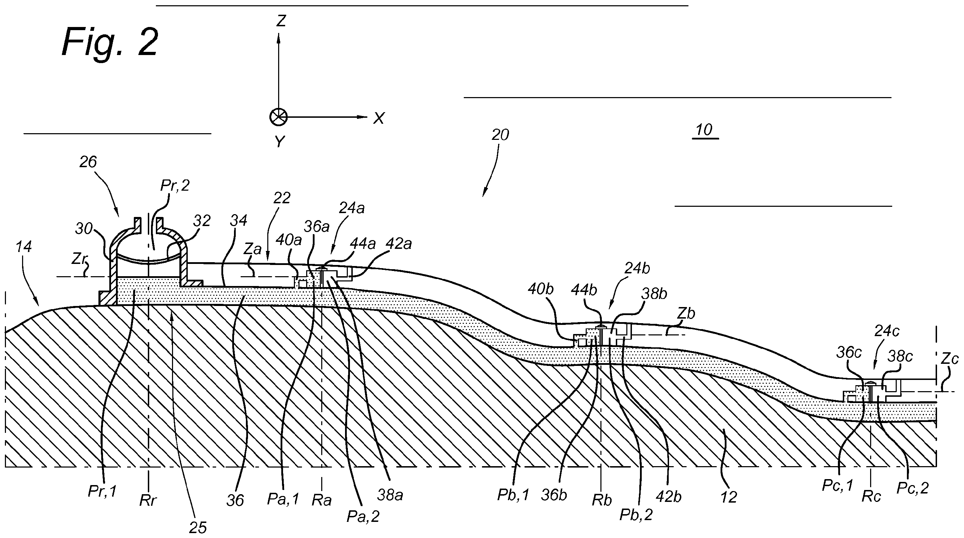

Figure 2 shows a partial cross-section of the device 20 from figure 1. In this exemplary embodiment, the tubular structure 22 includes a first fluid conduit 34 for accommodating a first liquid 36. In this example, the first liquid 36 has a mass density ρ1 that exceeds a mass density pw of the ambient ocean water 10, when the device 20 is deployed on the ocean floor 14. In this example, the first liquid 36 is a solution of Potassium Iodide salt in water, with a mass density ρ1 of about 1500 kg/m³. A mass density pw of ambient ocean water 10 at larger depths may be around 1050 kg/m³. In other embodiments, the first liquid be of a different composition and may have a mass density ρ1 lighter than water the mass density pw of the ambient ocean water.

In the deployed state, the pressure compensator 26 is located at a reference position Rr on or in the ocean floor 14, at a local height Zr. The pressure compensator 26 is configured for sampling a hydrostatic reference pressure Pr,2 exerted by a local (external) portion of the ocean water 10 at the reference position Rr. The pressure compensator 26 is configured for exerting an inner reference pressure Pr,1 on the first liquid 36 inside the first fluid conduit 34 at the reference position Rr, this inner reference pressure Pr,1 being proportional to the outer reference pressure Pr,2. The inner reference pressure Pr,1 will be dynamically adapted by the pressure compensator 26 in response to detected changes in the outer reference pressure Pr,2.

In this embodiment, the pressure compensator 26 comprises a first reference vessel 30 that defines an inner void for holding a portion of the first liquid 36. The inner void of the vessel 30 is in fluid communication with the first fluid conduit 34. The first reference vessel 30 comprises a first moveable wall member 32 that is substantially impermeable to the first liquid 36 and to the surrounding body of ocean water 10, and forms a flexible interface between the inner void and the surrounding body of ocean water 10. Here, the first moveable wall member 32 is formed by a membrane 32 that is attached along an inner periphery of the first reference vessel 30. This membrane 32 forms a passive means (i.e. not controlled by powered actuators) for dynamically adapting the inner reference pressure Pr,1 acting on the first liquid 36 inside the vessel 30, in response to changes in the outer reference pressure Pr,2.

The first fluid conduit 34 is coupled to the first reference vessel 30 at one end, but closed at an opposite distal end, which in this case is near the end body 28 at the second distal end 27 of the elongated structure 22.

The pressure transducers 24 are located along the elongated structure 22 at respective sample positions Ra, Rb, Rc,... on or in the ocean floor 14, at local heights Za, Zb, Zc,... with respect to the vertical direction Z. Each pressure transducer 24i is in fluid communication with the first liquid 36 in the first fluid conduit 34 at the corresponding sample position Ri. At this sample position Ri, the first liquid 36 is subject to a first pressure Pi,1 based on the communicating vessels principle. The first pressure Pi,1 is thus dependent on the inner reference pressure Pr,1 generated by the pressure compensator 26 at the reference position Rr and on a local hydrostatic pressure contribution from the liquid 36 resulting from a (possibly non-zero) difference between the local height Zi of the liquid 36 at the sample position Ri and the height Zr of the liquid 36 at the reference position Rr.

Each pressure transducer 24i is also in fluid communication with a second liquid 38 at the corresponding sample position Ri. At this position, the second liquid 38 is subject to a second pressure Pi,2. In the embodiment of figure 2, the second liquid 38 forms a (local) portion of the body of ambient ocean water 10 that directly surrounds the pressure transducer 24i. In this case, the second pressures Pi,2 correspond to local ambient pressures of the ocean water 10.

Each pressure transducer 24i comprises one or more differential pressure sensors 44i, which are configured for measuring a differential pressure ΔPi between the corresponding first pressure Pi,1 and the second pressure Pi,2 at the respective sample position Ri. The differential pressure sensors 44 thus measure differences between local first pressures Pi, 1 in the first fluid conduit 34 versus local pressures Pi,2 in the ambient water column 10. The differential pressure sensors 44 may be based on conventional strain-based pressure sensing mechanisms. A pressure sensor 44 may for example comprise a diaphragm that is deformable in response to pressure differentials, and which is mechanically coupled to an optical fiber with a fiber Bragg grating (FBG) that is configured to adapt its index of refraction in response to deformation of the diaphragm.

The control circuit 60 is communicatively coupled to the differential pressure sensors 44, to receive data from the differential pressure sensors 44 that represent the indications of measured differential pressures ΔPi. In this embodiment, the control circuit 60 is configured to calculate height profile differences ΔZi associated with the pressure transducers 24i and with respect to the reference height Zr of the first liquid 36, based on the indications of the differential pressures ΔPi received from the differential pressure sensors 44i. The memory unit 64 of the control circuit 60 is configured to store the height profile differences ΔZi with timestamps, to form a dataset of time-dependent height profiles. The transmitter 66 may transmit this dataset, continuously, intermittently, or in response to a request from a nearby vehicle with a data receiver.

In alternative embodiments, the pressure sensors 44i may be configured and calibrated in advance to allow instant conversion of the measured differential pressure ΔPi into an indication of height difference ΔZi, and to transmit the height difference ΔZi indication to the control circuit 60 instead.

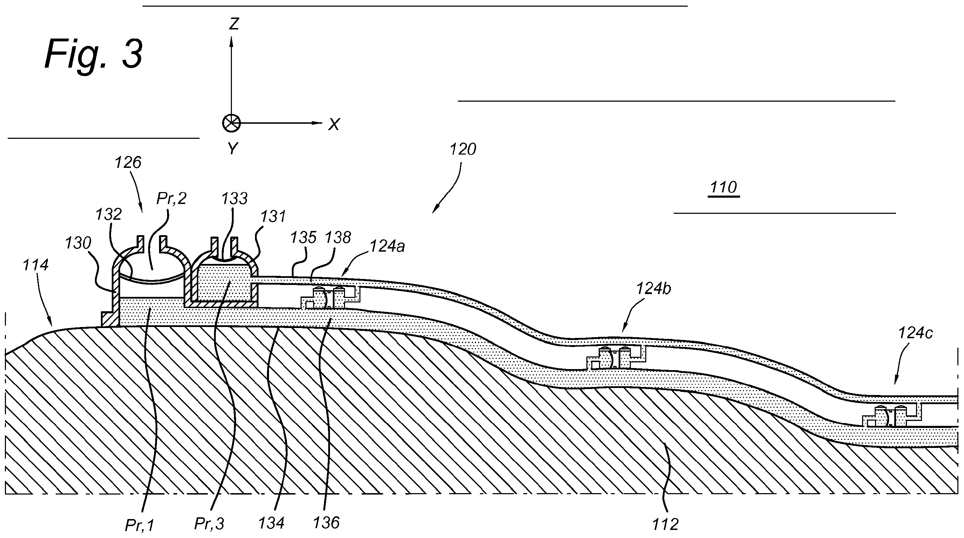

Figure 3 shows a partial cross-sectional view of another embodiment of a device 120. Features in the device 120 that have already been described above with reference to the first embodiment of the device 20 (in particular figures 1-2) may also be present in the device 120 shown in figure 3, and will not all be discussed here again. For the discussion with reference to figure 3, like features are designated with similar reference numerals preceded by 100, to distinguish the embodiments.

Similar as in the above-described device embodiment, the device 120 shown in figure 3 comprises differential pressure transducers 124i that are provided along the elongated structure 122, and a pressure compensator 126 at a first distal end 125 of the elongated structure 122.

The pressure transducers 124i are in fluid communication with the first liquid 136 at corresponding first pressures Pi,1 based on the communicating vessels principle. The pressure transducers 124i are also in fluid communication with a second liquid 138 at corresponding second pressures Pi,2. In this embodiment, the second liquid 138 is a separate reference liquid 138 and the elongated structure 122 further includes a second fluid conduit 135 for accommodating this second liquid 138.

The pressure compensator 126 is adapted for exerting a further inner reference pressure Pr,3 onto the second liquid 138, this further inner reference pressure Pr,3 also being proportional to the local outer reference pressure Pr,2. In this embodiment, the pressure compensator 126 comprises a second reference vessel 131 in addition to the first reference vessel 130. The second reference vessel 131 defines a further inner void for holding a portion of the second liquid 138, and which is in fluid communication with the second fluid conduit 135. The second reference vessel 131 comprises a second moveable wall member (e.g. a second membrane) 133 that is substantially impermeable to the second liquid 138 and to the surrounding body of ocean water 110. This second membrane 133 forms a flexible interface between the further inner void and the surrounding body of ocean water 110, and constitutes a passive means for dynamically adapting the inner reference pressure Pr,3 on the second liquid 138 inside the second vessel 131 in response to changes in the outer reference pressure Pr,2.

The first and second fluid conduits 134, 135 are coupled to their corresponding reference vessels 130, 131 at one end, but closed at respective opposite distal ends, which in this case is near the end body 128 at the second distal end 127 of the elongated structure 122.

In this particular embodiment, the second liquid 138 has a second mass density p2 that is smaller than the mass density pw of liquid water. The second liquid 138 with low mass density may for example be oil, which has a typical mass density ρ2 in a range of 700 to 900 kg/m³. Use of a relatively incompressible liquid 138 allows the second fluid conduit 135 and the second reference vessel 131 to be filled already during assembly of the monitoring device 120. Air or other gasses (which generally have a high compressibility) are preferably avoided for use as second fluid. The use of gas as a second fluid would require total mechanical shielding of the second fluid conduit 135 and the second reference vessel 131 from the surrounding body of water 110, to avoid considerable compression of the gas at large water depths (which complicates manufacturing), or it would require a large tank with compressed gas to fill the second fluid conduit 135 once the device 120 is deployed on the ocean floor 114 (which complicates deployment).

In this embodiment, pressure differences ΔPi are measured by the pressure transducers 124i (with differential pressure sensors 144i) between the first pressure Pi,1 in the first liquid 136 and the second pressure Pi,2 in the second liquid 138 at the respective sample positions Ri. Use of the pressure compensator 126 with passive pressure compensation system for both the first fluid conduit 134 and the second fluid conduit 135 allows residual spatial pressure deviations (e.g. from wave motion) to be cancelled out.

The height difference ΔZi at each sample position Ri may in a first approximation be determined from the measured pressure differences ΔPi and mass densities ρ1, ρ2 via the expression ΔZi = ΔPi / (g · (ρ1 - ρ2)), wherein g is the earth's gravitational acceleration modified for the ocean floor depth with respect to the earth surface. To allow measurement of non-zero pressure differences ΔPi by the pressure transducers 124i, the first mass density ρ1 of the first liquid 136 and the second mass density ρ2 of the second liquid 138 should be different. Preferably, a difference between the first and second liquid mass densities ρ1, ρ2 is relatively large, so that relatively little height differences translate into relatively large measured pressure differences ΔPi.

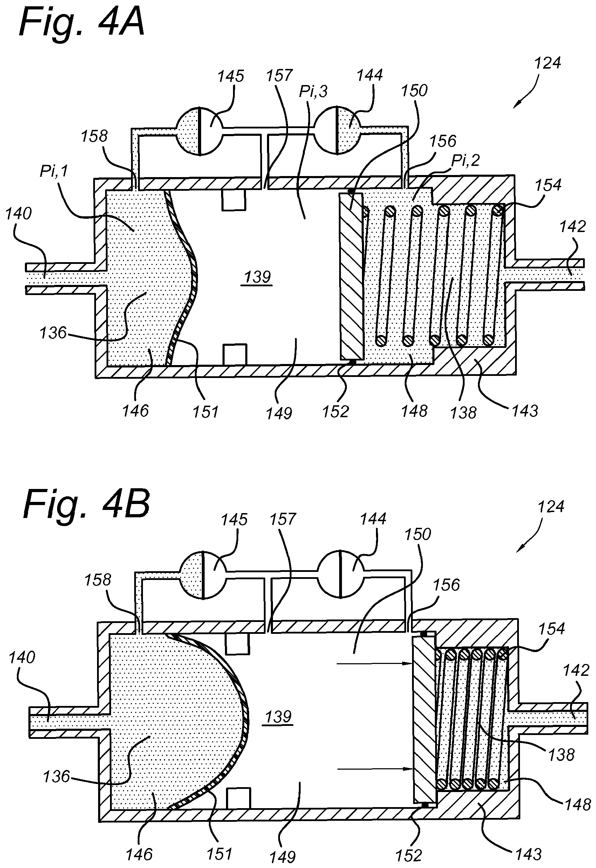

Figures 4a and 4b show schematic cross-sections of a pressure transducer 124 in a sensing mode and a calibrating mode respectively. The pressure transducer 124 comprises a housing 143 that defines a first chamber 146, a second chamber 148, and an intermediate chamber 149, and comprises a first fluid port 140 and a second fluid port 142.

The first port 140 is in fluidly coupled to the first fluid conduit 134 (see e.g. figure 3), and the second fluid port 142 is fluidly coupled to the second liquid 138. In the exemplary embodiment of figure 3, the second liquid 138 is accommodated inside the second fluid conduit 135. In other embodiments, the second fluid port 142 may be in fluid communication with local portions of the ambient body of water 110, similar to the device embodiment in figure 2.

The first chamber 146 is fluidly coupled to the first fluid conduit 134 via the first port 140, and is adapted for accommodating a variable portion of the first liquid 136. The second chamber 148 is fluidly coupled via the second fluid port 142, and is adapted for accommodating a variable portion of the second liquid 138. The intermediate chamber 149 is adapted for accommodating an intermediate liquid 139. The second chamber 148 is coupled to the intermediate chamber 149 by a first moveable wall 150 that is impermeable for the second liquid 138 and the intermediate liquid 139. Preferably, the second liquid 138 and the intermediate liquid 139 have the same compositions, e.g. ambient ocean water (figure 2) or oil (figure 3). The first chamber 146 is coupled to the intermediate chamber 149 by a second moveable wall 151 that is impermeable for the first liquid 136 and the intermediate liquid 139.

The pressure transducer 124 comprises a first differential pressure sensor 144 that is configured for acquiring differential pressure measurements ΔPi between the second liquid 138 in the second chamber 148 and the intermediate liquid 139 in the intermediate chamber 149. The first differential pressure sensor 144 comprises two sensor ports 156, 157

In this embodiment, the portion of the housing 143 that is associated with the second and intermediate chambers 148, 149 forms a piston cylinder that encloses a cylindrical void. Here, the first moveable wall 150 is formed as a piston body that is moveable through the cylindrical void between outer positions. This piston body 150 is provided with a sealing ring or gasket 152 (e.g. an O-ring or C-ring) around its circumference. The sealing ring 152 engages the inner wall of the housing 143 to provide a seal between the liquids in the second chamber 148 and the intermediate chamber 149. A biasing member 154 (e.g. a coil spring) is provided inside the housing 143. This biasing member 154 mutually connects the housing 143 and the piston body 150. The biasing member 154 allows the piston body 150 to linearly displace through the cylindrical void and with respect to the housing 143 over a finite trajectory, as a result of a pressure differences between the second liquid 138 in the second chamber 148 and the intermediate liquid 139 in the intermediate chamber 139. Displacement of the piston body 150 will cause the biasing member 154 to exert a restoring force onto the piston body 150 (and housing 143), which causes the piston body 150 to assume a new equilibrium position as long as the pressure difference between the liquids is maintained.

A set of centered positions of the piston body 150, wherein the piston body 150 is located between the two sensor ports 156, 157, corresponds to a sensing mode of the pressure transducer 124 (see figure 4a). This sensing mode allows acquisition of differential pressure measurements ΔPj between the second liquid 138 in the second chamber 148 and the intermediate liquid 139 in the intermediate chamber 149.

A set of outer positions of the piston body 150, wherein the piston body 150 is located beyond both of the sensor ports 156, 157, corresponds to a calibrating mode of the pressure transducer 124. Figure 4b illustrates the piston body 150 in a position to the right of both the sensor ports 156, 157, so that the intermediate liquid 139 will be in fluid communication with both the sensor ports 156, 157 of the first differential pressure sensor 144, to allow zero-offset calibration of this sensor 144. In this embodiment, the piston body 150 may also be positioned to the left of both sensor ports 156, 157 (not shown), so that the second liquid 138 will be in fluid communication with both the sensor ports 156, 157 of the first differential pressure sensor 144. This position may also allow zero-offset calibration of the differential pressure sensor 144. Both outer positions of the piston body 150 correspond to calibrating modes of the pressure transducer 124. The pressure transducer 124 may therefore automatically switch to a calibration mode when the first liquid 136 in the first fluid conduit 134 is subjected to a significant underpressure as well as a significant overpressure with respect to the second liquid 138.

The above transducer arrangement allows zero-offset calibration of the first differential pressure sensor 144 at desired times and/or according to a predetermined schedule, even when deployed subsea. Long-term biasing errors can be easily mitigated by routine calibrations at predetermined times, without needing interventions by divers or significant down-time of the monitoring device 120.

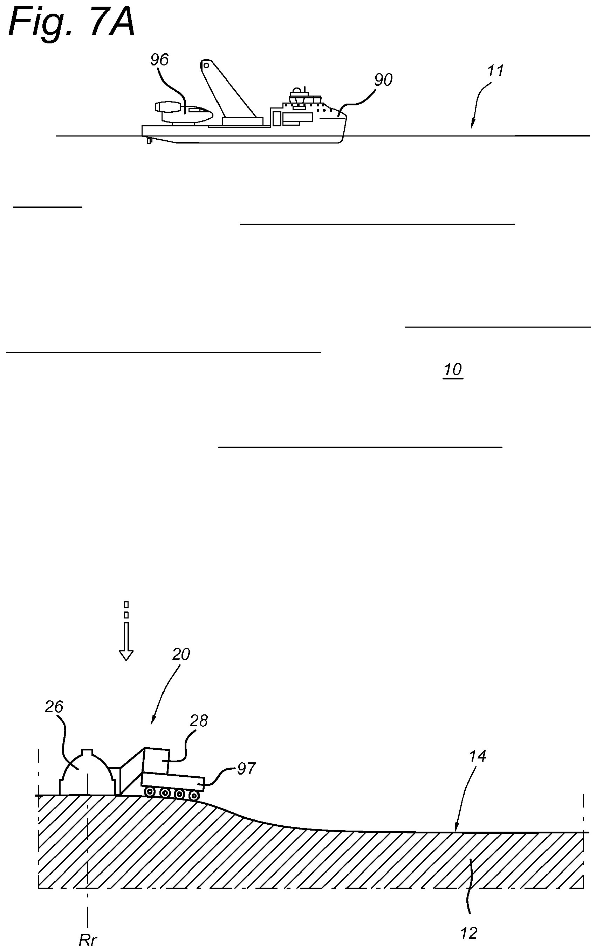

When the monitoring device 120 is lowered into the water body 110 during deployment, the elongated structure 122 may temporarily extend curvingly up/downwards or even entirely vertical through the water body 110 (see e.g. figures 7a-7b). In these situations, the pressure compensator 126 and pressure transducers 124 may be at significantly different height levels in the water body 110, and thus may experience considerably different hydrostatic pressures. If only the sensing mode were available, then the large pressure differences experienced by the differential pressure sensors 144 would damage the pressure transducers 124. The automatic calibration modes of the proposed pressure transducers 124 provide an automatic pressure-activated overload protection mechanism that does not require electrical power or active control, and help to protect the first differential pressure sensors 144 from the large pressure differences.

In alternative embodiments, the housing of the pressure transducer may be formed so as to allow only one of the above-mentioned calibrating positions (i.e. either left or right piston positions).

In the embodiment of figures 4a-4b, the second moveable wall 151 is formed as a flexible membrane with a high compliance. The flexible membrane 151 helps to transfer pressure in the first liquid 136 to the intermediate liquid 139 with negligible pressure drop, but prevents contamination of the first liquid 136 by the intermediate liquid 139 (and vice versa). The pressure transducer 124 further comprises a second differential pressure sensor 145 that is configured for acquiring further differential pressures ΔPk between the first liquid 136 in the first chamber 146 and the intermediate liquid 139 in the intermediate chamber 149. The second differential pressure sensor 145 allows monitoring of the pressure drop ΔPk across the second moveable wall 151. This second differential pressure ΔPk constitutes a relatively small correction to the first differential pressure ΔPj measured by the first differential pressure sensor 144. The first differential pressure ΔPj and second differential pressure ΔPk should be added to determine the overall differential pressure difference ΔPi between the first liquid 136 and the second liquid 138 (i.e. ΔPi = ΔPj + ΔPk).

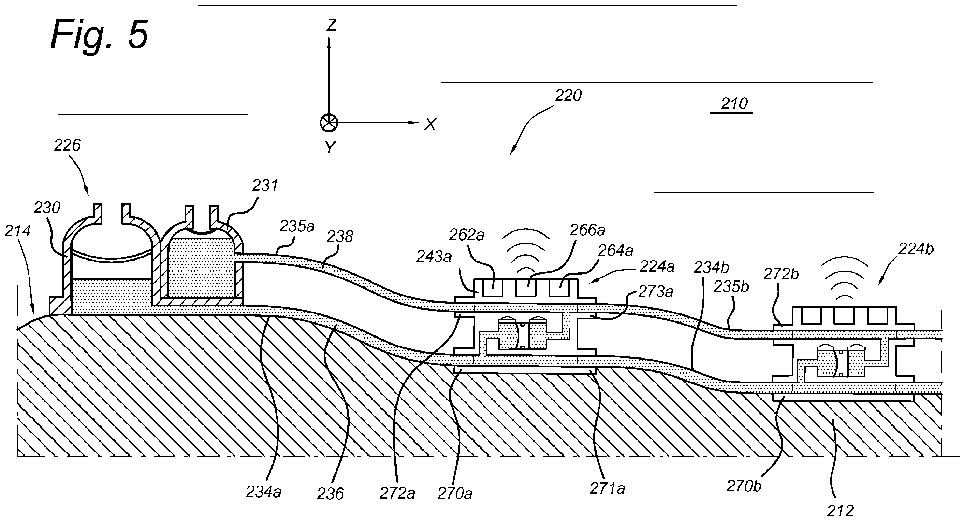

Figure 5 schematically shows another embodiment of a level monitoring device 220 with modular pressure transducers 224. The level monitoring device 220 in figure 5 forms an elongated structure that includes separate differential pressure transducer modules 224. Each individual pressure transducer 224i is formed as a modular unit that comprises a housing 243i with a control processor 262i, a memory unit 264i, a data transmitter 266i, and a power supply 268i. The modular arrangement allows each pressure transducer module 224i to function independently from the other transducer modules 224j.

The processor unit 262i is configured for calculating the indication of the height profile difference ΔZi associated with the corresponding pressure transducer 224i. The local memory unit 264i is configured for storing the calculated height profile difference ΔZi with a timestamp, and for forming a dataset of time-dependent height profiles for this pressure transducer 224i. The transmitter 266i is configured for communicating the dataset to a receiver of an external vehicle. Alternatively or in addition, the transducer modules 224i may be provided with an optical transceiver unit (e.g. with LED, photocell, and microcontroller), to establish optical communication coupling with a central control circuit of the monitoring device 220. The local power source 268i is configured for powering the processor unit 262i, the memory unit 264i, and the communication unit 266i of the corresponding transducer module 224i. Providing each pressure transducer module 224i with a dedicated control processor 262i, memory unit 264i, data transmitter 266i, and power supply 268i, will reduce the likelihood that a failure of an individual transducer module 224i will cause a general failure of the monitoring device.

In this example, each housing 243i is provided with first to fourth conduit couplings 270-273. The first conduit coupling 270i is adapted for mechanically connecting the first fluid conduit 234i to the housing 243i, and for establishing fluid communication between the pressure transducer module 224i and the first fluid conduit 234i. The second conduit coupling 271i is adapted for mechanically connecting a further first fluid conduit 234j (e.g. associated with a subsequent pressure transducer module 224j) to the housing 243i, and for establishing fluid communication between the first fluid conduit (234i) and the further first fluid conduit (234j). The third conduit coupling 272i is adapted for mechanically connecting the second fluid conduit 235i to the housing 243i, and for establishing fluid communication between the pressure transducer module 224i and the second fluid conduit 235i. The fourth conduit coupling 273i is adapted for mechanically connecting a further second fluid conduit 235j (e.g. associated with the subsequent pressure transducer module 224j) to the housing 243i, and for establishing fluid communication between the second fluid conduit 235i and the further second fluid conduit 235j. Via the fluid couplings 270-273, each pressure transducer module 224i may be connected to at least one further pressure transducer 224j. The modules 224 may thus be connected in series to form a monitoring device 220 that extends over several kilometers along the sea floor 214.

Further pressure transducer modules 224i may for example be connected at appropriate locations by an underwater vehicle. Due to the dynamic pressure compensation mechanism provided by the pressure compensator 226 in the deployed monitoring device 220, the ambient ocean water 210 and the first liquid 236 in the first fluid conduit 234 and the second liquid 238 in the second fluid conduit 235 will have almost identical pressures. This pressure equalization reduces the probability of mixing and contamination between ambient water 210 and the liquids 236/238 in the fluid conduits 234/235 during connection of further fluid conduits and/or pressure transducers. The dynamic pressure compensation mechanism thus facilitates modular design and connectivity with additional transducer modules 224j.

In yet further embodiments, each module may comprise additional fluid couplings, so that the modules may be connected in star-, tree, and/or ring (polygon) patterns, to form a level monitoring sensor network.

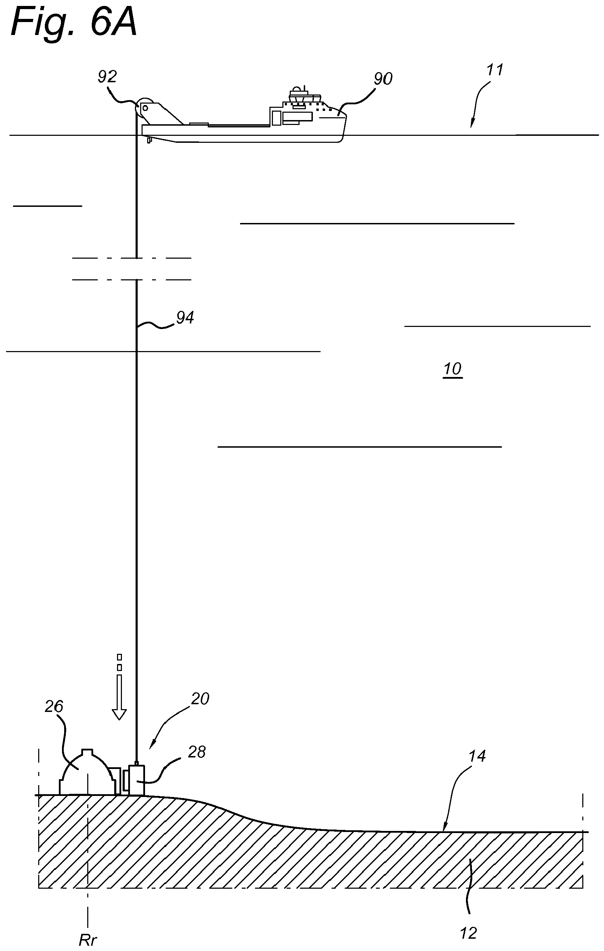

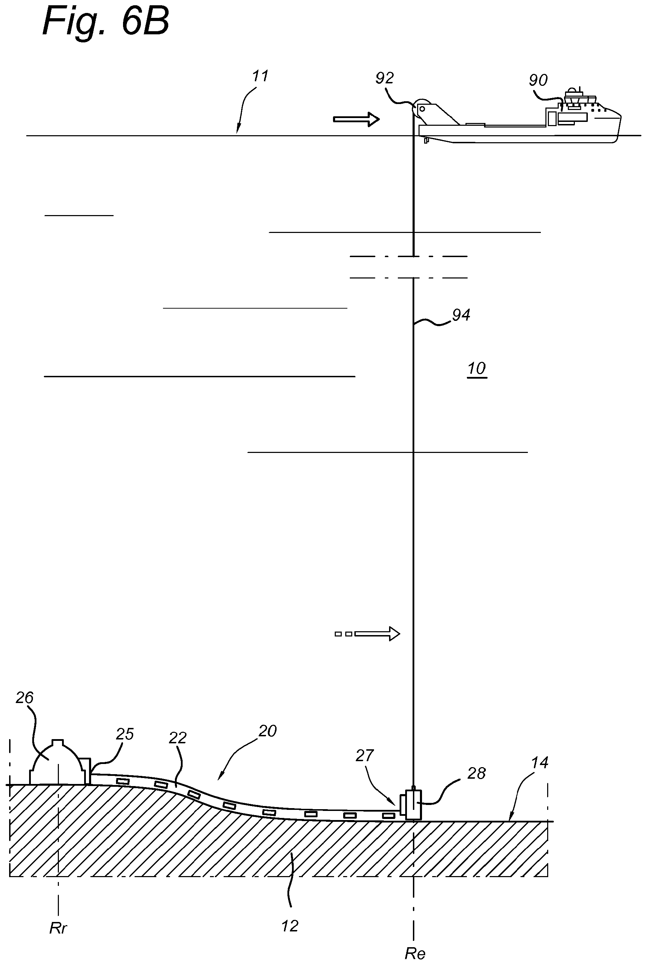

Figures 6a and 6b illustrate an exemplary method for deploying a device on an ocean floor 14 or other submerged earth surface that is located below a body of water 10. Although the below description re-uses the reference numbers relating to the device embodiment of figure 2, it should be understood that the device may be formed in accordance with any of the device embodiments discussed herein above. This exemplary deployment method involves use of a deployment vessel 90, including a hoisting system 92 with a cable 94 of variable length.

In a first stage, this method embodiment comprises:
- providing the device 20 on board the vessel 90, with the device 20 in a stowed state wherein the elongated structure 22 is rolled up or folded up;
- coupling the device 20 in the stowed state at the second distal end 27 to the cable 94 of the hoisting system 92, and
- moving the vessel 90 to a first position at a water surface 11.

In a second stage, this method embodiment comprises:
- suspending the device 20 via the cable 94 in the body of water 10, and
- unreeling the cable 94 to lower the device 20 in the stowed state through the body of water 10 towards the submerged earth surface 14.

In a third stage, this method embodiment comprises:
- positioning the first distal end 25 of the elongated structure 22 on/in the submerged surface 14 at a first deployment position Rr. The first distal end 25 may for example be fixed by anchoring means, or by sheer weight of the pressure compensator 26.

In a fourth stage, this method embodiment comprises:
- moving the vessel 90 with the unreeled cable 94 to a second position at the water surface 11, thereby moving a second distal end 27 of the elongated structure 22 along the submerged earth surface 14 to a second deployment position Re, while unrolling or unfolding the elongated structure 22, to put the device 20 into a deployed state.

The cable 94 may be decoupled from the second distal end 27 after the second distal end 27 has been moved to the second deployment position Re.

In should be understood that the above procedure can also be executed in a situation wherein the roles of the first end 25 and the second end 27 of the monitoring device 20 are reversed.

In both cases, the differential pressures ΔPi as perceived by the differential pressure sensors 44 will remain relatively small during deployment, because the height differences ΔZi between all pressure transducers 24 remain small at all times. No further protective measures will therefore be needed to protect the pressure transducers 24 against damage from overload.

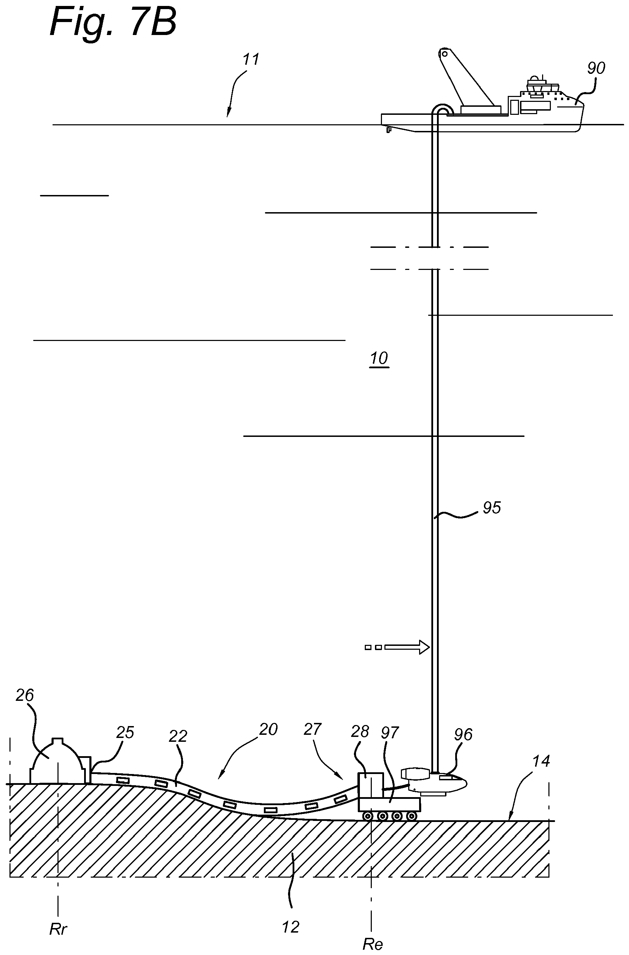

Figures 7a and 7b illustrate another embodiment of a method for deploying a device. Again, reference numbers relating to the device embodiment of figure 2 are used, but it should be understood that the device may be formed in accordance with any of the embodiment discussed herein above.

In a first stage, this method embodiment comprises:
- providing the device 20 in a stowed state on board a vessel 90, wherein the elongated structure 22 is rolled up or folded up;
- providing the second distal end 27 of the elongated structure 22 with a chassis 97 that is adapted for reducing friction if the chassis 97 and second end 27 of the device 20 would be moved along to the submerged earth surface 14, and
- moving the vessel 90 to a first position at a water surface 11.

The chassis 97 may for example comprise wheels and/or skids for facilitating motion along the submerged earth surface 14.

In a second stage, this method embodiment comprises:
- lowering the device 20 in the stowed state through the body of water 10 and moving it onto or near to the submerged earth surface 14.

An underwater vehicle 96 may for example be coupled to the monitoring device 20 and used to pull the device 20 in the stowed state to a first deployment position Rr.

In a third stage, this method embodiment comprises:
- fixing a first distal end 25 of the elongated structure 22 to the submerged surface 14 at the first deployment position Rr. Again, the first distal end 25 may be fixed by anchoring means, or the pressure compensator 26 may have sufficient mass and roughness or gripping protrusions to fix this part to the ocean floor 14.

In a fourth stage, this method embodiment comprises:
- moving the coupled underwater vehicle 96, which is coupled to the second distal end 27 of the elongated structure 22, along the submerged earth surface 14 towards the second deployment position Re, thereby towing the second distal end 27 of the elongated structure 22 and the chassis 97 across the submerged earth surface 14 to the second deployment position Re. During towing of the second distal end 27, the elongated structure 22 will be unrolled or unfolded, to assume a trajectory along the ocean floor 14. The device 20 assumes a deployed state once the second distal end 27 (e.g. with end body 28) is at the second deployment position Re.

The underwater vehicle 96 may be decoupled from the second distal end 27 after the second distal end 27 has been moved to the second deployment position Re.

Also in this case, the procedure may be executed in a reversed situation for the first end 25 and the second end 27 of the monitoring device 20. Again, the differential pressures ΔPi as perceived by the differential pressure sensors 44 will remain relatively small during deployment, as the pressure transducers 24 remain at substantially similar heights at all times.

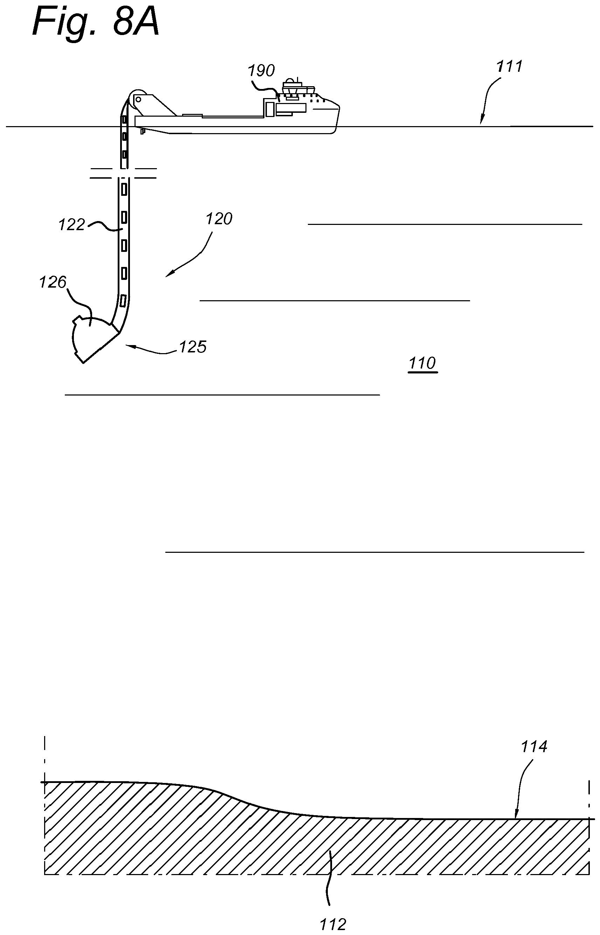

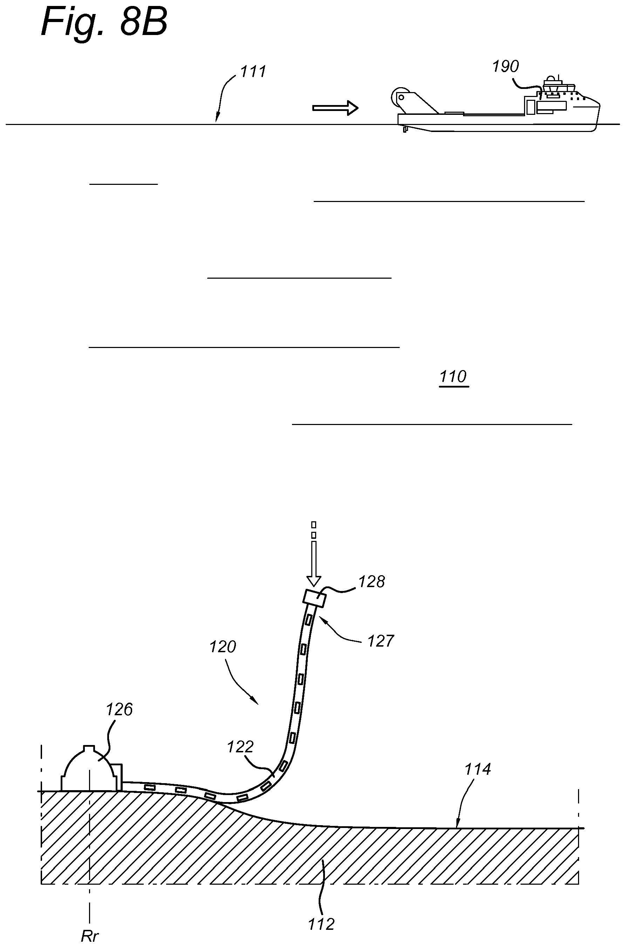

Figures 8a and 8b illustrate yet another embodiment of a method for deploying a device 120. In this case, reference numbers relating to the device embodiment of figure 3 are used, as this method embodiment requires multi-mode differential pressure transducers 124 according to the principles discussed with reference to figures 4a and 4b.

This method embodiment comprises:
- providing the device 120 in a stowed state on board a vessel 190, with the elongated structure 122 rolled up or folded up and the pressure transducers 124 kept in a calibrating state;
- moving the vessel 190 to a first position at a water surface 111;
- unrolling or unfolding the elongated structure 122 while lowering the device 120 with a first distal end 125 through the body of water 110;
- fixing the first distal end 125 of the elongated structure 122 to the submerged earth surface 114 at a first deployment position Rr;
- further unrolling or unfolding part of the elongated structure 122 on board the vessel 190, while moving the vessel 190 to a second position along the water surface 111;
- lowering the second distal end 127 of the elongated structure 122 to a second deployment position Re at the submerged earth surface 114, followed by
- putting the pressure transducers 124 into a sensing state.

This method embodiment involves lowering of the device 120 into the water body 110, with the elongated structure 122 extending diagonally and/or vertically through the water body 110. Without any pressure compensation means, this lowering would cause large pressure differences ΔPi for each pressure transducer 124 along the elongated structure 122, which could damage the differential pressure sensors 144. By providing pressure transducers 124 with automatic calibration mode(s), damage from pressure overload can be avoided.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. It will be apparent to the person skilled in the art that alternative and equivalent embodiments of the invention can be conceived and reduced to practice. All changes which come within the meaning and range of equivalency of the claims are to be embraced within their scope.

Multiple devices may be jointly deployed in the same region of the ocean floor to form a sensor network. Each monitoring device may function as a node in such a sensor network. The control circuits in the monitoring devices may be configured to exchange sensor measurement data, height profile data and/or device status data between monitoring devices, so that any or all of these data sets from other nodes will be available in each node. Each device may comprise a transceiver unit for exchanging such data with neighboring devices. The transceiver units may be configured to communicate data via low power optical and/or acoustic transmission channels.

The control circuits of the devices in the sensor network may be configured to schedule their transmissions of measurement data and/or status data to a surface station at different times. Exchange of data between the nodes to form collective data sets, and distributing and scheduling network-to-surface transmissions of such collective data sets between the nodes helps to reduce power consumption. Network-to-surface communication may for example occur based on acoustic or optic data transmissions to a surface buoy or to a wave-propelled surface water drone, or based on transport of a physical data carrier using consumable pop-up buoys.

Note that for reasons of conciseness, the reference numbers corresponding to similar elements in the various embodiments (e.g. element 120 being similar to element 20) have been collectively indicated in the claims by their base numbers only i.e. without the multiples of hundreds. This does not suggest that the claim elements should be construed as referring only to features corresponding to base numbers. Although the similar reference numbers have been omitted in the claims, their applicability will be apparent from a comparison with the figures.

### LIST OF REFERENCE SYMBOLS

Similar reference numbers that have been used in the description to indicate similar elements (but differing in the hundreds for distinct embodiments, or differing in the indices for distinct instances of the element) have been omitted from the list below. All similar reference numbers should be considered implicitly included in the list.
- 10: body of water (e.g. sea water)
- 11: water surface
- 12: submerged earth layer (e.g. subsea soil layer)
- 14: submerged earth surface (e.g. sea floor, ocean floor)
- 20: level monitoring device (differential pressure-based)
- 22: flexible elongated structure
- 24: pressure transducer
- 25: first distal end
- 26: pressure compensator
- 27: second distal end
- 28: end body
- 30: first reference vessel
- 32: first compensator wall (e.g. diaphragm)
- 34: first fluid conduit
- 36: first liquid (high density)
- 38: second liquid
- 40: first fluid port
- 42: second fluid port
- 44: differential pressure sensor
- 46: first chamber portion
- 48: second chamber portion
- 50: first wall (e.g. piston)
- 52: wall sealing member (e.g. O-ring)
- 54: wall biasing member (e.g. spring)
- 60: control circuit
- 62: processor unit
- 64: memory unit
- 66: data transmitter
- 68: power supply
- 90: deployment vessel
- 92: winch
- 94: cable
- 96: underwater vehicle (e.g. rover, UAV)
- 97: chassis (e.g. cart or skid glider)
- 98: data receiver
- 131: second reference vessel
- 133: second compensator wall
- 135: second fluid conduit
- 139: intermediate liquid (low density)
- 143: housing
- 145: further differential pressure sensor
- 149: intermediate chamber portion
- 151: second wall (e.g. impermeable diaphragm)
- 156: first sensor port
- 157: second sensor port
- 158: third sensor port
- 270: first conduit coupling
- 271: second conduit coupling
- 272: third conduit coupling
- 273: fourth conduit coupling
- X: first direction (longitudinal direction)
- Y: second direction (transversal direction)
- Z: third direction (vertical direction)
- i: transducer index (i = a, b, c, d, ..)
- Ri: sample position (in transversal XY-plane)
- Rr: reference position (in transversal XY-plane)
- Zi: sample height
- Zr: reference height
- ΔZi: height difference (Zi - Zr)
- ΔPi: pressure difference
- Pr,1: inner reference pressure
- Pr,2: outer reference pressure
- Pr,3: further inner reference pressure
- Pi, 1: first pressure
- Pi,2: second pressure

## Claims

1. A device (20) for monitoring a height profile of a submerged earth surface (14) located below a body of water (10), the device comprising:
- an elongated structure (22), configured for deployment along the submerged earth surface, and including a first fluid conduit (34) for accommodating a first liquid (36);
- at least one differential pressure transducer (24i), which is provided along the elongated structure, and which is adapted to be in fluid communication with the first liquid at a corresponding first pressure (Pi,1) based on the communicating vessels principle and with a second liquid (38) at a corresponding second pressure (Pi,2) when in use, and configured to measure a differential pressure (ΔPi) between the corresponding first and second pressures, and
- a processing circuit (60) configured for obtaining an indication of a height profile difference (ΔZi) associated with the at least one pressure transducer, based on the differential pressure measured by the at least one pressure transducer;
wherein the device further comprises a pressure compensator (26), which is configured to exert on the first liquid in the first fluid conduit an inner reference pressure (Pr,1) in response and proportional to an outer reference pressure (Pr,2) that is exerted on the pressure compensator by the body of water at a reference position (Rr) on or in the submerged earth surface.

2. The device (20) according to claim 1, wherein the second liquid (38) is part of the body of water (10), wherein the at least one differential pressure transducer (24i) is adapted to be in fluid communication with a local portion (38i) of the body of water (10) at a corresponding sample position (Ri) when in use, and wherein the second pressure (Pi,2) corresponds to a local ambient pressure of the body of water at the corresponding sample position.

3. The device (120) according to claim 1, wherein the second liquid (138) is a reference liquid, wherein the elongated structure (122) includes a second fluid conduit (135) for accommodating the second liquid, wherein the pressure compensator (126) is configured to exert onto the second liquid in the second liquid conduit a further inner reference pressure (Pr,3) in response and proportional to the outer reference pressure (Pr,2) that is exerted on the pressure compensator by the body of water at the reference position (Rr).

4. The device (20) according to any one of claims 1 - 3, wherein the pressure compensator (26) comprises a first reference vessel (30) that defines an inner void for holding a portion of the first liquid (36), wherein the inner void is in fluid communication with the first fluid conduit (34), and wherein the first reference vessel comprises a first compensator wall (32) that is substantially impermeable to the first liquid and to the body of water (10), wherein the first compensator wall defines an interface between the inner void and the body of water, and is at least partially moveable to allow dynamic adaptation of the inner reference pressure (Pr,1) of first liquid inside the first reference vessel in response to changes in the outer reference pressure (Pr,2).

5. The device (120) according to any one of claims 1 - 4, wherein the at least one pressure transducer (124i) comprises a housing (143) that defines:
- a first chamber (146) that is adapted for accommodating a variable portion of the first liquid (136);
- a second chamber (148) that is fluidly coupled to the second fluid port (142) and adapted for accommodating a variable portion of the second liquid (138);
- an intermediate chamber (149) for accommodating an intermediate liquid (139); wherein the pressure transducer further comprises a first differential pressure sensor (144) that is configured for acquiring differential pressure measurements (ΔPj) between the second liquid in the second chamber and the intermediate liquid in the intermediate chamber;
wherein the second chamber (148) is coupled to the intermediate chamber (149) by a first moveable wall (150) that is impermeable for the second liquid and the intermediate liquid, and wherein the first chamber (146) is coupled to the intermediate chamber (149) by a second moveable wall (151) that is impermeable for the first liquid and the intermediate liquid.

6. The device (120) according to claim 5, wherein the first differential pressure sensor (144) comprises two sensor ports (156, 157), wherein second chamber (148) and the intermediate chamber (149) jointly define a piston cylinder, wherein the first moveable wall (150) is formed as a piston head that is moveable through the piston cylinder between:
- a first position wherein the piston head is between the two sensor ports, corresponding to a sensing mode of the pressure transducer (124) and allowing acquisition of differential pressure measurements (ΔPj) between the second liquid (138) in the second chamber and the intermediate liquid (139) in the intermediate chamber, and
- a second position wherein the piston head is past the two sensor ports, corresponding to a calibrating mode of the pressure transducer wherein either the second liquid or the intermediate liquid is in fluid communication with both of the two sensor ports to allow zero-offset calibration of the first differential pressure sensor.

7. The device (120) according to claim 6, wherein the second moveable wall (151) is formed as a flexible membrane with a high compliance, wherein the pressure transducer (124) further comprises a second differential pressure sensor (145) that is configured to acquire further differential pressure measurements (ΔPk) between the first liquid (136) in the first chamber (146) and the intermediate liquid (139) in the intermediate chamber (149).

8. The device (20) according to any one of claims 1 - 7, wherein the processing circuit (60) comprises:
- a memory unit (64) for storing the calculated height profile differences (ΔZi) with timestamps, to form a dataset of time-dependent height profiles, and
- a transmitter (66) for communicating the dataset to a receiver (98) of an external vehicle (96).

9. The device (20) according to claim 8, wherein the transmitter (66) is configured for communicating data via at least one of an acoustic, optic, or wired transmission channel.

10. The device (220) according to any one of claims 1 - 7, wherein the at least one differential pressure transducer (224) is formed as a modular unit comprising:
- a housing (243) provided with a first conduit coupling (270) configured to mechanically connect the housing to the first fluid conduit (234) and to establish fluid communication between the pressure transducer and the first fluid conduit;
- a processor unit (262) configured to calculate the indication of the height profile difference (ΔZi), based on the differential pressure (ΔPi) measured by the at least one pressure transducer;
- a memory unit (264) for storing the calculated indication of the height profile difference with a timestamp, to form a dataset of time-dependent height profiles;
- a transmitter (266) for communicating the dataset to an external receiver, and
- a power source (268), for powering the processor unit, the memory unit, and the communication unit.

11. The device (220) according to claim 10, wherein the housing (243) comprises a second conduit coupling (271) configured to mechanically connect a further first fluid conduit (234j) to the housing, and to establish fluid communication between the first fluid conduit (234i) and the further first fluid conduit (234j).

12. A method for deploying a device (20) according to any one of claims 1 - 11 on a submerged earth surface (14) located below a body of water (10), wherein the method comprises:
a) providing the device (20) in a stowed state on board a vessel (90), wherein the elongated structure (22) is rolled up or folded up;
b) lowering the device in the stowed state through the body of water and onto or near to the submerged earth surface;
c) fixing a first distal end (25, 27) of the elongated structure to the submerged surface at a first deployment position (Rr, Re), and
d) moving a second distal end (27, 25) of the elongated structure along the submerged earth surface to a second deployment position (Re, Rr), while unrolling or unfolding the elongated structure, to put the device into a deployed state.

13. The method according to claim 12, wherein providing the device (20) in a stowed state comprises:
a1) moving the vessel (90) to a first position at a water surface (11);
a2) coupling the device in a stowed state at the second distal end (27, 25) to a cable (94) of a hoisting system (92) provided on the vessel;
wherein lowering of the device in the stowed state comprises:
b1) suspending the device via the cable in the body of water (10) while unreeling the cable;
wherein moving the second distal end of the elongated structure comprises:
d1) moving the vessel with the unreeled cable to a second position to move the second distal end of the elongated structure to the second deployment position (Re, Rr).

14. The method according to claim 12, wherein providing the device (20) in a stowed state comprises:
a1) providing the second distal end (27, 25) of the elongated structure (22) with a chassis (97) adapted for lowering friction of motion with respect to the submerged earth surface (14);
a2) moving the vessel (90) to a first position at a water surface (11);
wherein moving the second distal end (27, 25) of the elongated structure comprises:
d1) coupling an underwater vehicle (96) to the second distal end of the elongated structure, and
d2) moving the coupled underwater vehicle along the submerged earth surface to the second deployment position (Re, Rr).

15. A method for deploying a device (120) according to any one of claims 1 - 11 on a submerged earth surface (114) located below a body of water (110), wherein the device includes at least one pressure transducer (124) in accordance with claim 6, wherein the method comprises:
a) providing the device in a stowed state on board a vessel (190), with the elongated structure (122) rolled up or folded up and the at least one pressure transducer (124i) kept in a calibrating state;
b) moving the vessel to a first position at a water surface (111);
c) unrolling or unfolding the elongated structure while lowering the device with a first distal end (125, 127) through the body of water;
d) fixing the first distal end of the elongated structure to the submerged earth surface at a first deployment position (Rr, Re);
e) further unrolling or unfolding the elongated structure while moving the vessel to a second position along the water surface, and
f) lowering the second distal end (127, 125) of the elongated structure to a second deployment position (Re, Rr) at the submerged earth surface, followed by
g) transitioning the at least one pressure transducer (124i) into a sensing state.

16. A method for monitoring a height profile of a submerged earth surface (14) located below a body of water (10), comprising:
- providing along the submerged earth surface (14) a device (20) including a pressure compensator (26) and an elongated structure (22) with a first fluid conduit (34) and at least one differential pressure transducer (24) according to any one of claims 1 - 11;
- sampling with the pressure compensator (26) an outer reference pressure (Pr,2) at a reference position (Rr) on/in the submerged earth surface, and exerting with the pressure compensator (26) an inner reference pressure (Pr,1) that is proportional to the outer reference pressure onto the first liquid;
- allowing the at least one differential pressure transducer (24i) to establish fluid communication with the first liquid at corresponding first pressures (Pi,1) based on the communicating vessels principle, and with a second liquid (38) at corresponding second pressures (Pi,2);
- measuring a differential pressure (ΔPi) between the corresponding first and second pressures with each of the at least one pressure transducer, and
- obtaining indications of height profile differences (ΔZi) based on the differential pressures measured by the at least one pressure transducer.
